# EUROPEAN PATENT SPECIFICATION

(11) **EP 0 727 388 B1**
(45) Date of publication and mention of the grant of the patent: **05.01.2000**
(21) Application number: 96850022.3
(22) Date of filing: 07.02.1996
(51) Int. Cl.: C01B 15/013

(54) **Process for preparing a substantially pure aqueous solution of hydrogen peroxide**
Verfahren zur Herstellung einer grösstenteils sauberen wässrigen Lösung von Wasserstoffperoxid
Méthode pour la préparation d'une solution de peroxyde d'hydrogène substantiellement pure

(30) Priority: 15.02.1995 FI 950679
(43) Date of publication of application: 21.08.1996
(73) Proprietor: KEMIRA CHEMICALS OY, 00101 Helsinki (FI)
(72) Inventor: Johnsson, Pekka, 02320 Espoo (FI); Mattila, Tapio, 2566 DR Den Haag (NL); Saari, Kari, 01610 Vantaa (FI)
(74) Representative: Saijonmaa, Olli-Pekka

(56) References cited:
- EP-A- 0 529 722
- DE-C- 969 396
- FR-A- 1 182 410
- FR-A- 1 336 389
- US-A- 3 152 052
- CHEMICAL ABSTRACTS, vol. 69, no. 14, 30 September 1968 Columbus, Ohio, US; abstract no. 53300, S. MARZEC ET AL.: "Purification of hydrogen peroxide aqueous solutions" XP002002992 & PL-A-55 378 (ZAKLADY ELEKTROCHEMICZNE ZABKOWICE) 25 June 1968

## Description

The present invention relates to a process for the preparation of a purified aqueous solution (10) of hydrogen peroxide having a selected concentration within the range of 15-75% by weight, wherein the solution is formed from a vapor (3, 7) containing hydrogen peroxide, the vapor having been separated from a liquid phase (6) containing hydrogen peroxide, in such a manner that the non-volatile impurities have been left in the separation in the liquid phase.

For example, crude hydrogen peroxide obtained by the anthraquinone process contains as impurities anthraquinone derivatives and metallic impurities derived from the apparatus. These have to be removed from the pure hydrogen peroxide solution obtained as a final product.

In the publication PL-A-55378 there is described a process for the purification of aqueous hydrogen peroxide solutions in which the solution is preliminarily purified by evaporation and fractional condensation. Thereafter the solution is passed through a series of ion exchanging columns for further purification.

From US patent publication 3 152 052 there is known a process for purifying hydrogen peroxide wherein an impure hydrogen peroxide solution is subjected to vaporization, in which it is divided into a pure vapor consisting of hydrogen peroxide and water and a concentrated hydrogen peroxide solution which contains the impurities. The vapor is thereafter directed to a rectifier, in which it is heated further and into which water is additionally fed, for example by reflux cooling of the steam leaving the rectifier. The products obtained from the rectifier are a pure aqueous solution of hydrogen peroxide and a steam which may contain small residues of hydrogen peroxide. The impure concentrated hydrogen peroxide solution is treated in a separate stripper-enricher, and the hydrogen peroxide recovered therein is recycled for being combined with the hydrogen peroxide solution being directed to the vaporizer for vaporization.

The disadvantages of the hydrogen peroxide purification treatment described in US patent 3 152 052 include the complexity and high cost of the process and of the apparatus required by it. Furthermore, as stated in FI patent application 923843 (corresp. EP patent 529 722), the process involves a risk of explosion due to the concentrations of hydrogen peroxide and organic impurities.

Said FI patent application 923843 discloses a method for the preparation of aqueous solutions of purified hydrogen peroxide, in which solutions the concentration of hydrogen peroxide is high, in general over 50 % by weight, and usually over 60 %. The impure hydrogen peroxide solution to be treated is fed to a vaporizer and thereafter to a phase separator, from which a vapor containing water and hydrogen peroxide and a concentrated hydrogen peroxide solution containing impurities are obtained. The vapor is directed further to a rectifier column which has a scrubbing zone for the removal of any remaining impurities and, above it, a redistillation zone. Into the upper end of the last-mentioned, pure water is fed to flow in the column against the rising stream of vapor. A purified concentrated hydrogen peroxide solution, which is obtained as the final product, and a vapor which is nearly pure water vapor are removed from the distillation zone of the column.

In the same way as the process described in US publication 3 152 052, also that described in FI application 923843, with the apparatus it requires, is complicated and expensive. Furthermore, it is inflexible with respect to variation of the concentration of the hydrogen peroxide solution obtained.

The object of the present invention is to provide a process for the preparation of a purified aqueous solution of hydrogen peroxide, which process is simpler, requires less expensive equipment, and enables the concentration of the obtained hydrogen peroxide solution to be varied flexibly. The process according to the invention is characterized in that the aqueous solution (10) is formed from the vapor (7) by partial condensation, wherein the vapor is cooled in a condenser (8) by external heat exhange (9) in such a manner that it is divided into a condensate having a higher hydrogen peroxide concentration and a residual vapor, in equilibrium therewith, having a lower hydrogen peroxide concentration, the condensation efficiency in the partial condensation being regulated so that the desired hydrogen peroxide concentration within the above mentioned range is achieved in the condensate, and the condensate is removed from the condenser as the final product of the process and the residual vapor, in equilibrium with the condensate, is directed further from the condenser.

The limits of variation of the concentration of the hydrogen peroxide solution obtained in accordance with the invention are determined by the concentration of hydrogen peroxide in the vapor being condensed. Within this variation range, regulation of the concentration of the solution obtained can thereafter be carried out simply by adjusting the condensation efficiency of the condenser. As already noted, the concentration of the hydrogen peroxide solution is in the range of 15-75% by weight. The theoretical upper limit of the hydrogen peroxide concentration is the hydrogen peroxide concentration in a solution in equilibrium with the vapor fed into the condenser, for example it is approx. 70-80 % by weight at a hydrogen peroxide concentration of approx. 30 % in the vapor. If the condensation efficiency is low, values close to this theoretical maximum can be arrived at, but the yield of the hydrogen peroxide solution obtained will be low. If the condensation efficiency is increased, the concentration of hydrogen peroxide in the obtained solution becomes lower, while the amount of solution increases. Respectively, the amount of residual vapor decreases and its hydrogen peroxide concentration drops. The method according to the invention is thus excellent for the preparation of, for example, a commercial purified approx. 35 % hydrogen peroxide solution. The theoretical lower limit of the concentration of hydrogen peroxide in the solution obtained in the condensation is the concentration of hydrogen peroxide in the vapor fed into the condenser, although in this limit case, in which all of the vapor is condensed, what is in question is no longer a partial condensation. According to the invention, condensation is not carried out to completion; instead, the residual vapor is treated separately, for example in a separate condenser, and the dilute hydrogen peroxide solution obtained therefrom can be recycled to the process for the preparation of hydrogen peroxide.

The pressure prevailing in the partial condensation, according to the invention, of a vapor containing hydrogen peroxide can be maintained within a range of approx. 30-100 mbar, preferably 50-80 mbar. At pressures this low, there is no risk of explosion.

According to the invention, water can be used as the cooling heat-transfer medium in the partial condensation of vapor containing hydrogen peroxide. The condensation efficiency may thus be regulated by means of the flow rate and temperature of the cooling water.

The purification process according to the invention can start with an impure hydrogen peroxide solution obtained from a process for the preparation of hydrogen peroxide, such as the anthraquinone process. The first step of the purification process is in this case the vaporization treatment of this impure solution, wherein the forming vapor containing hydrogen peroxide settles in an equilibrium with a liquid phase which contains hydrogen peroxide and the impurities. For example, a solution having a hydrogen peroxide concentration of approx. 50 % by weight is divided in the vaporizer at a pressure of 50 mbar into a vapor phase having a hydrogen peroxide concentration of approx. 30 % by weight and a liquid phase having a hydrogen peroxide concentration of approx. 73 %. The obtained vapor is directed to a drop separator, from where any residues of the liquid phase are returned to the vaporizer and the vapor continues its travel to a condenser, where the partial condensation according to the invention takes place. At the prevailing pressure of 50 mbar, the vapor can be divided in the condenser into a pure hydrogen peroxide solution having a hydrogen peroxide concentration of approx. 35 % by weight and residual vapor having a hydrogen peroxide concentration of approx. 5 % by weight. The residual vapor is transferred to an after-condenser, where it condenses in its entirety to a dilute, approx. 5 wt. %, hydrogen peroxide solution, which can be returned to the process for the preparation of hydrogen peroxide.

According to the invention, the vapor containing hydrogen peroxide, to be partially condensed, can be taken directly from the hydrogen peroxide preparation process instead of the said vaporization treatment of impure hydrogen peroxide solution taken from the hydrogen peroxide preparation process. The condition in this case is that the vapor is pure, i.e. separated from the liquid in connection with the preparation so that any impurities contained in it have been left in the liquid phase. Owing to this possibility, the preparation of a purified hydrogen peroxide solution according to the invention can easily and flexibly be combined with existing processes for the preparation of hydrogen peroxide.

The invention is described below in greater detail, first with reference to a drawing which depicts the process scheme of one process according to the invention for the preparation of a hydrogen peroxide solution, and thereafter with the help of an embodiment example of this process.

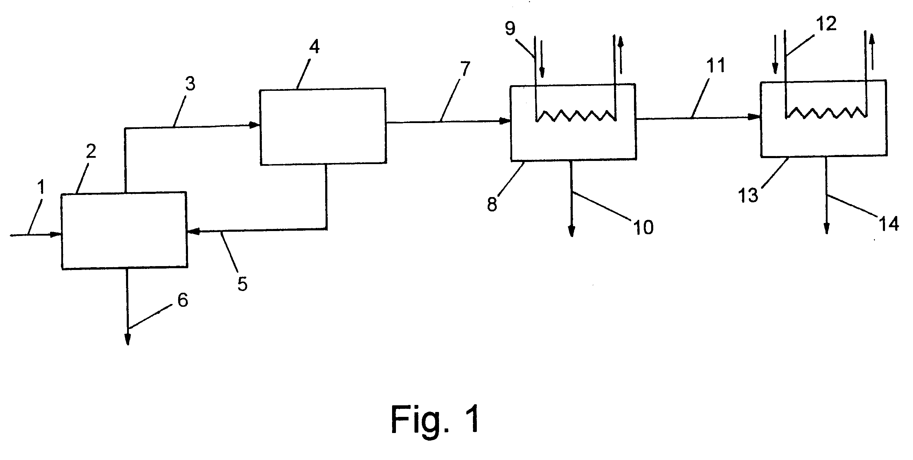

According to the accompanying drawing, an impure aqueous solution 1 obtained from a hydrogen peroxide preparation process, such as the anthraquinone process, is directed to a vaporizer 2, which is, for example, a forced-circulation vaporizer operating at an absolute pressure of 50-100 mbar. Within this pressure range the temperature of the solution remains at a level sufficiently low in terms of safety. The vaporizer 2 divides the solution fed to it into a vapor having a lower hydrogen peroxide concentration and a solution, in equilibrium therewith, having a higher hydrogen peroxide concentration. Any nonvolatile impurities, such as anthraquinone derivatives and heavy metallic components, remain in this connection in the liquid phase. The obtained vapor 3 is directed from the vaporizer 2 to a drop separator 4, from where the separated liquid 5 returns to the vaporizer 2. The concentrated hydrogen peroxide solution 6, which contains the impurities, is removed from the vaporizer 2. The vapor 7, consisting of hydrogen peroxide and water, free of liquid drops, is directed from the drop separator 4 to a condenser 8, which is equipped with cooling-water circulation 9. In the condenser 8 the vapor 7 partly condenses to a pure aqueous solution of hydrogen peroxide. The forming solution, having a higher hydrogen peroxide concentration, is in equilibrium with the remaining residual vapor having a lower hydrogen peroxide concentration. The amount and hydrogen peroxide concentration of the solution formed in the partial condensation can be regulated by means of the condensation efficiency. The hydrogen peroxide solution 10 is removed from the condenser 8 as the final product of the process, while the residual vapor 11 is directed further to an after-condenser 13 equipped with cooling-water circulation 12, where the residual vapor condenses in its entirety to a dilute hydrogen peroxide solution 14.

### Example

18.7 kg of a raw impure hydrogen peroxide solution, having a hydrogen peroxide concentration of 50 % and a temperature of 20 °C, was fed into a vaporizer in which the pressure was 80 mbar and the temperature 64 °C. As a result of the vaporization at the said pressure of 64 °C, 10 kg of a vapor having a hydrogen peroxide concentration of 30 % and 8.7 kg of a solution containing the impurities and having a hydrogen peroxide concentration of 73 % were removed from the vaporizer. The vapor stream was directed to a drop separator, from which a small amount of liquid separated as drops was returned to the vaporizer. 10 kg of drop-free vapor was directed, at a pressure of 80 mbar and a temperature of 64 °C, further to a condenser, which was cooled with water and in which the temperature was 47 °C. As a result of the partial condensation, 8.44 kg of a pure hydrogen peroxide solution having a hydrogen peroxide concentration of 35 % and 1.56 kg of a residual vapor having a hydrogen peroxide concentration of 5 % were removed from the condenser. The residual vapor was directed to an after-condenser, in which 1.56 kg of a hydrogen peroxide solution having a hydrogen peroxide concentration of 5 % was obtained at 42 °C.

For an expert in the art it is clear that the various embodiments of the invention are not limited to that presented above by way of example; they may vary within the accompanying patent claims.

## Claims

1. A process for the preparation of a purified aqueous solution (10) of hydrogen peroxide having a selected concentration within the range of 15-75 % by weight, wherein the solution is formed from a vapor (3, 7) containing hydrogen peroxide, the vapor having been separated from a liquid phase (6) containing hydrogen peroxide, in such a manner that the non-volatile impurities have been left in the separation in the liquid phase, **characterized** in that the aqueous solution (10) is formed from the vapor (7) by partial condensation, wherein the vapor is cooled in a condenser (8) by external heat exhange (9) in such a manner that it is divided into a condensate having a higher hydrogen peroxide concentration and a residual vapor, in equilibrium therewith, having a lower hydrogen peroxide concentration, the condensation efficiency in the partial condensation being regulated so that the desired hydrogen peroxide concentration within the above mentioned range is achieved in the condensate, and the condensate is removed from the condenser as the final product of the process, and the residual vapor, in equilibrium with the condensate, is directed further from the condenser.

2. A process according to Claim 1, **characterized** in that the partial condensation of the vapor takes place at a pressure of approx. 30-100 mbar, preferably 50-80 mbar.

3. A process according to Claim 1 or 2, **characterized** in that the vapor-cooling heat-transfer medium used is water.

4. A process according to any of the above claims, **characterized** in that the vapor (3, 7) containing hydrogen peroxide is formed in a vaporizer (2), wherein it is in equilibrium with a liquid phase which contains hydrogen peroxide and the impurities, and is directed thereafter via a drop separator (4) to a condenser (8).

5. A process according to Claim 4, **characterized** in that the vapor (3, 7) is formed from an impure hydrogen peroxide solution (1) directed to the vaporizer (2) from a process for the preparation of hydrogen peroxide, such as the anthraquinone process.

6. A process according to any of the above claims, **characterized** in that the residual vapor (11) left over from the partial condensation is condensed in a second condenser (13) to a dilute hydrogen peroxide solution (14), which is returned to the process for the preparation of hydrogen peroxide.

7. A process according to any of the above claims, **characterized** in that the hydrogen peroxide concentration in the vapor to be condensed is regulated beside the condensation efficiency.

8. A process according to Claim 7, **characterized** in that an approx. 35 % hydrogen peroxide solution is prepared by the process.

## Patentansprüche

1. Verfahren zur Herstellung einer gereinigten wässerigen Lösung (10) von Wasserstoffperoxid mit einer ausgewählten Konzentration innerhalb eines Bereichs von 15 - 75 Gew.-%, wobei die Lösung aus einem Wasserstoffperoxid enthaltenden Dampf (3, 7) entsteht, der aus einer Wasserstoffperoxid enthaltenden flüssigen Phase (6) auf eine Weise abgeschieden wird, daß die nicht-flüchtigen Verunreinigungen in der Trennungsflüssigkeit verbleiben,
dadurch gekennzeichnet,
daß die wässerige Lösung (10) aus einem Dampf (7) durch Teilkondensation entsteht, wobei der Dampf in einem Verflüssiger (8) durch externen Wärmeaustausch (9) in einer Weise gekühlt wird, daß er in ein Kondensat mit einer höheren Wasserstoffperoxidkonzentration und einem damit im Gleichgewicht befindlichen Restdampf mit einer geringeren Wasserstoffperoxidkonzentration geteilt wird, wobei der Kondensationswirkungsgrad in der Teilkondensation so eingestellt wird, daß die gewünschte Wasserstoffperoxidkonzentration innerhalb des oben angegebenen Bereichs im Kondensat erreicht wird, wobei das Kondensat aus dem Verflüssiger als Endprodukt des Verfahrens entfernt wird, während der mit dem Kondensat im Gleichgewicht stehende Restdampf vom Verflüssiger aus weitergeleitet wird.

2. Verfahren nach Anspruch 1,
dadurch gekennzeichnet,
daß die Teilkondensation des Dampfes bei einem Druck von etwa 30-100 mbar, vorzugsweise 50-80 mbar, stattfindet.

3. Verfahren nach Anspruch 1 oder 2,
dadurch gekennzeichnet,
daß als Dampfkühlungs- und Wärmeübertragungsmedium Wasser verwendet wird.

4. Verfahren nach einem der vorhergehenden Ansprüche,
dadurch gekennzeichnet,
daß der Wasserstoffperoxid enthaltende Dampf (3, 7) in einem Verdampfer (2) gebildet wird, wobei er im Gleichgewicht mit einer flüssigen Phase ist, die Wasserstoffperoxid und die Verunreinigungen enthält, und nachfolgend über einen Tropfenabscheider (4) zu einem Verflüssiger (8) geleitet wird.

5. Verfahren nach Anspruch 4,
dadurch gekennzeichnet,
daß der Dampf (3, 7) aus einer unreinen Wasserstoffperoxidlösung (1) entsteht, die aus einem Verfahren zur Herstellung von Wasserstoffperoxid, wie z. B. dem Anthrachinon-Verfahren, zu dem Verdampfer (2) geleitet wird.

6. Verfahren nach einem der vorhergehenden Ansprüche,
dadurch gekennzeichnet,
daß der Restdampf (11), der bei der Teilkondensation übrigbleibt, in einem zweiten Verflüssiger (13) zu einer verdünnten Wasserstoffperoxidlösung (14) kondensiert wird, die in das Verfahren zur Herstellung von Wasserstoffperoxid zurückgeführt wird.

7. Verfahren nach einem der vorhergehenden Ansprüche,
dadurch gekennzeichnet,
daß die Wasserstoffperoxidkonzentration im zu kondensierenden Dampf neben dem Kondensationswirkungsgrad gesteuert wird.

8. Verfahren nach Anspruch 7,
dadurch gekennzeichnet,
daß eine etwa 35 %-ige Wasserstoffperoxidlösung durch das Verfahren hergestellt wird.

## Revendications

1. Procédé pour la préparation d'une solution aqueuse purifiée (10) d'eau oxygénée qui a une concentration choisie dans la gamme de 15-75% en poids, où la solution est formée à partir d'une vapeur (3, 7) contenant de l'eau oxygénée, la vapeur ayant été séparée d'une phase liquide (6) contenant de l'eau oxygénée de telle manière que les impuretés non volatiles ont été laissées dans la phase liquide lors de la séparation, caractérisé en ce que la solution aqueuse (10) est formée à partir de la vapeur (7) par condensation partielle, où la vapeur est refroidie dans un condenseur (8) par échange de chaleur externe (9) de telle manière qu'elle est divisée en un condensat qui a une plus haute concentration d'eau oxygénée et en une vapeur résiduelle, en équilibre avec lui, ayant une concentration d'eau oxygénée inférieure, l'efficacité de la condensation dans la condensation partielle étant régulée afin que la concentration de l'eau oxygénée désirée dans la gamme susmentionnée soit obtenue dans le condensat, et le condensat est retiré du condenseur comme produit final du procédé et la vapeur résiduelle, en équilibre avec le condensat, est dirigée au delà du condenseur.

2. Procédé selon la revendication 1 caractérisé en ce que la condensation partielle de la vapeur a lieu à une pression d'env. 30-100 mbar, de préférence de 50-80 mbar.

3. Procédé selon la revendication 1 ou 2, caractérisé en ce que le moyen de transfert de chaleur de refroidissement de la vapeur utilisé est l'eau.

4. Procédé selon l'une quelconque des revendications ci-dessus, caractérisé en ce que la vapeur (3, 7) contenant de l'eau oxygénée est formée dans un évaporateur (2), où elle est en équilibre avec une phase liquide qui contient de l'eau oxygénée et les impuretés, et est dirigée ensuite par l'intermédiaire d'un séparateur de gouttes (4) vers un condenseur (8).

5. Procédé selon la revendication 4, caractérisé en ce que la vapeur (3, 7) est formée à partir d'une solution d'eau oxygénée impure (1) dirigée vers l'évaporateur (2) depuis un procédé pour la préparation d'eau oxygénée, tel que le procédé à l'anthraquinone.

6. Procédé selon l'une quelconque des revendications ci-dessus, caractérisé en ce que la vapeur résiduelle (11) restant de la condensation partielle est condensée dans un deuxième condenseur (13) en une solution d'eau oxygénée diluée (14) qui est renvoyée au procédé pour la préparation d'eau oxygénée.

7. Procédé selon l'une quelconque des revendications ci-dessus, caractérisé en ce que la concentration de l'eau oxygénée dans la vapeur à condenser est régulée outre l'efficacité de la condensation.

8. Procédé selon la revendication 7, caractérisé en ce qu'une solution d'eau oxygénée d'env. 35% est préparée par le procédé.
